# EUROPÄISCHE PATENTANMELDUNG

(11) **EP 2 120 021 A1**
(43) Veröffentlichungstag der Anmeldung: **18.11.2009**
(21) Anmeldenummer: 09159421.8
(22) Anmeldetag: 05.05.2009
(51) Int. Cl.: G01F 11/00, G01F 13/00

(54) **Dosiergerät zur Dosierung einer Lösung in eine Flüssigkeit**

(30) Priorität: 16.05.2008 DE 102008023958
(71) Anmelder: Witty-Chemie GmbH & Co. KG, 86424 Dinkelscherben (DE)
(72) Erfinder: FARKHAR, Human, 86465, Welden (DE)
(74) Vertreter: Charrier, Rapp & Liebau

(57) **Zusammenfassung**

Die Erfindung betrifft ein Dosiergerät zur Dosierung einer Lösung in eine Flüssigkeit, mit wenigstens einer Dosierpumpe (7), welche die Lösung über eine Saugleitung (10) aus einem Vorratsbehälter (1) zu einer Impfstelle (11) in die Flüssigkeit fördert, einem in Saugrichtung vor der Dosierpumpe (7) angeordneten Gasfilter (4), welcher über eine Abschaltsteuerung (4a) die Dosierpumpe (7) abschaltet, wenn der Gasfilter (4) mit Gas befüllt ist und einem nach der Dosierpumpe (7) angeordneten Sicherungsimpulsdämpfer (8) zur Überwachung des Drucks der geförderten Lösung an der Impfstelle (11). Um die Entgasung des gasbefüllten Gasfilters sowie eine Wiederbefüllung des Gasfilters mit der wässrigen Lösung automatisiert und ohne Gefahr für eine Bedienperson durchführen zu können, ist nach der Erfindung eine die Dosierpumpe (7) umgehende Bypassleitung (12) vorgesehen, durch welche die Lösung vom Sicherungsimpulsdämpfer (8) in den Gasfilter (4) zur Wiederbefüllung des Gasfilters (4) zurück fließen kann, wenn der Gasfilter bei Befüllung mit Gas die Dosierpumpe (7) abgeschaltet hat.

## Beschreibung

Die Erfindung betrifft ein Dosiergerät zur Dosierung einer Lösung in eine Flüssigkeit, nach dem Oberbegriff des Anspruchs 1.

Ein derartiges Dosiergerät, welches bspw. zum Dosieren einer Wasseraufbereitungslösung in das Schwimmbadwasser verwendet werden kann, ist aus der DE 8603824U1 bekannt. Dieses Dosiergerät weist eine Dosierpumpe auf, welche eine in einem Vorratsbehälter befindliche wässrige Lösung über eine Saugleitung ansaugt und zu einer Impfstelle in die Flüssigkeit, nämlich eine flüssigkeitsgefüllte Rohrleitung, fördert. Um zu vermeiden, dass die Dosierung durch Luftbläschen im Dosierpumpenkopf der Dosierpumpe zum Erliegen kommt, ist ein Gasfilter in Form eines Blasenabscheiders vorgesehen. Luftbläschen, die sich von der zur Dosierpumpe führenden Saugleitung lösen oder beim Ansaugen der wässrigen Lösung aus dem Vorratsbehälter in die Saugleitung gelangen, werden im Kopfteil des Blasenabscheiders gesammelt. Der Anschluss des Blasenabscheiders zur Saugseite der Pumpe befindet sich im flüssigkeitsgefüllten Fußteil, wodurch gewährleistet wird, dass keine Luftbläschen in die Dosierpumpe gelangen. Das bekannte Dosiergerät verfügt ferner über einen Sicherungsimpulsdämpfer zur Überwachung des Drucks der geförderten Lösung an der Impfstelle. Wird ein vorgegebener (dynamischer) Druck der geförderten wässrigen Lösung an der Impfstelle über- oder unterschritten, was beispielsweise bei einem Verstopfen des Impfventils oder einem Abknicken oder gar Platzen der Druckleitung erfolgen kann, wird die Dosierpumpe über Niveaugeber, die sich im Bodenteil und am Kopf des Sicherungsimpulsdämpfers befinden, automatisch abgeschaltet. Dadurch wird ein unkontrolliertes Austreten der Dosierlösung bei einer Funktionsstörung verhindert.

Wenn sich der Blasenabscheider vollständig mit Gas, insbesondere Luft gefüllt hat, muss die Dosierpumpe bei diesem bekannten Dosiergerät abgeschaltet und das Gas, das sich im Kopfteil des Blasenabscheiders gesammelt hat, muss abgelassen werden. Anschließend muss der Blasenabscheider wieder mit der wässrigen Lösung befüllt werden, wozu mittels einer Spritze die wässrige Lösung in den Blasenabscheider gezogen wird. Dies ist sehr umständlich, erfordert Personaleinsatz und ist für die Bedienperson gefährlich, weil sie mit der gesundheitsschädlichen wässrigen Lösung in Berührung kommen kann.

Die Aufgabe der Erfindung besteht darin, das bekannte Dosiergerät so weiter zu bilden, dass die Entgasung des gasbefüllten Gasfilters sowie die Wiederbefüllung des Gasfilters mit der wässrigen Lösung automatisiert und ohne Gefahr für eine Bedienperson durchgeführt werden kann.

Gelöst wird diese Aufgabe mit einem Dosiergerät mit den Merkmalen des Anspruchs 1. Bevorzugte Ausgestaltungen des Dosiergeräts sind den Unteransprüchen zu entnehmen.

Nachfolgend wird die Erfindung anhand eines Ausführungsbeispiels unter Bezugnahme auf die beleitenden Zeichnungen näher erläutert. Die Zeichnungen zeigen:
- **Fig. 1:**: Schematische Darstellung des erfindungsgemäßen Dosiergeräts;
- **Fig. 2:**: Schematische Darstellung der Funktionsweise des Dosiergeräts von Fig. 1, wobei die Fig. 2a das Dosiergerät in seiner Dosierfunktion, die Fig. 2b das Dosiergerät in einer Funktion zur Wiederbefüllung des Gasfilters mit der wässrigen Lösung und die Fig. 2c die Funktion des Dosiergeräts bei der Entleerung des mit wässriger Lösung befüllten Gasfilters zeigt.

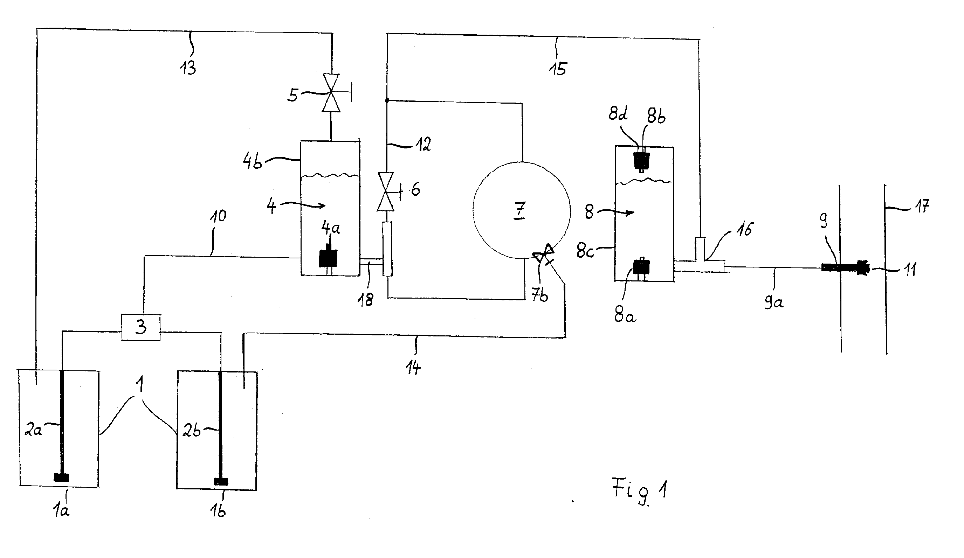

Das in Fig. 1 schematisch dargestellte Dosiergerät verfügt über einen Vorratsbehälter 1, in dem die in eine Flüssigkeit zu dosierende wässrige Lösung untergebracht ist. Bei dem in Fig. 1 gezeigten Ausführungsbeispiel des erfindungsgemäßen Dosiergeräts wird der Vorratsbehälter 1 durch zwei mit wässriger Lösung befüllte Gebinde 1a, 1b gebildet, welche über ein Drei/Zwei-Wege-Ventil 3 an eine Saugleitung 10 angeschlossen sind. Die Saugleitung 10 ist an eine Dosierpumpe 7 angeflanscht. Die Dosierpumpe 7 fördert aus einem der beiden Gebinde 1a oder 1b die wässrige Lösung, wobei die Entnahme der Dosierlösung zweckmäßig nur aus einem der beiden Gebinde erfolgt. Ist in diesem Gebinde ein minimaler Füllstand erreicht, sorgt eine Umschaltautomatik dafür, dass die Entnahme der Dosierlösung aus dem anderen, noch vollen Gebinde erfolgt. Die Entnahme der Dosierlösung aus dem Gebinde 1a oder 1b erfolgt über in die Gebinde eingeführte Sauglanzen 2a bzw. 2b, an deren unterem Ende jeweils ein Niveauschalter angeordnet ist, der die Umschaltautomatik zur Umschaltung der Entnahme von einem Gebinde zum anderen Gebinde steuert. Die Sauglanzen 2a und 2b sind zweckmäßig mit einem Rückschlagventil ausgestattet.

An die Dosierpumpe 7 schließt sich druckseitig eine Druckleitung 15 an. Die Druckleitung 15 mündet in ein T-Stück 16. An dem T-Stück 16 ist an dem einen Abzweig ein Sicherungsimpulsdämpfer 8 und am anderen Abzweig eine Impfleitung 9a angeflanscht. Die Impfleitung 9a führt zu einer Impflanze 9, welche an einer Impfstelle 11 in eine Rohrleitung 17 mündet. Durch die Rohrleitung 17 fließt die Flüssigkeit, der die Dosierlösung zudosiert werden soll.

Der Sicherungsimpulsdämpfer 8 dient zur Überwachung des dynamischen Drucks der geförderten wässrigen Lösung an der Impfstelle 11. Der Sicherungsimpulsdämpfer 8 verfügt hierzu über einen Sicherungsimpulsdämpferbehälter 8c, an dessen Boden ein erster Niveaugeber 8a und in dessen Kopfteil ein zweiter Niveaugeber 8b im vertikalen Abstand zueinander angeordnet sind. Die Niveaugeber 8a und 8b sind so an die Steuerschaltung der Dosierpumpe 7 gekoppelt, dass sie die Dosierpumpe 7 abschalten können, wenn in dem Sicherungsimpulsdämpferbehälter 8c ein vorgegebener Mindestpegel der wässrigen Lösung unterschritten oder ein vorgegebener Höchstpegel überschritten wird. Durch den Anschluss des Sicherungsimpulsdämpfers 8 an dem T-Stück 16 fördert die Dosierpumpe 7 durch die Druckleitung 15 wässrige Lösung in den Sicherungsimpulsdämpferbehälter 8c und der sich darin aufbauende Flüssigkeitspegel ist proportional dem Förderdruck der wässrigen Lösung an der Impfstelle 11. Bei einem Unterschreiten des vorgegebenen Mindestpegels ist der Förderdruck im System zu gering und bei einem Überschreiten des vorgegebenen Höchstpegels ist der Förderdruck zu hoch und in beiden Fällen wird die Dosierpumpe 7 abgeschaltet, um ein unbeabsichtigtes oder unkontrolliertes Austreten der Dosierlösung aus dem Dosiergerät durch Leckage zu verhindern. Der Sicherungsimpulsdämpfer sorgt ferner dafür, dass die sequentiellen Pumpenstöße der Dosierpumpe 7 in einen gleichmäßigen Volumenstrom (Dosierstrom) umgewandelt werden.

Das Luftvolumen im Sicherungsimpulsdämpfergehäuse 8c gibt den Überdruck vor, bei dem der Sicherungsimpulsdämpfer 8 die Dosierpumpe bei Überschreiten eines vorgegebenen Maximaldrucks abschaltet. Um die Abschaltpunkte einstellen zu können, ist in einem bevorzugten Ausführungsbeispiel vorgesehen, dass der vertikale Abstand der beiden Niveaugeber 8a und 8b einstellbar ist. Hierfür ist der obere Niveaugeber 8b entlang einer Führungsstange 8d verschiebbar angeordnet. Der (obere) Schaltpunkt kann dadurch beispielsweise zwischen einem Maximaldruck von ca. 4 bar bis zu einem Maximaldruck von ca. 6 bar eingestellt werden.

In der Saugleitung 10 ist in Saugrichtung vor der Dosierpumpe 7 ein Gasfilter 4 angeordnet. Der Gasfilter 4 umfasst einen Gasfilterbehälter 4b und eine Abschaltsteuerung 4a. Die Abschaltsteuerung 4a ist durch einen am Boden des Gasfilterbehälters 4b angeordneten Niveauschalter gebildet, der an die Steuerschaltung der Dosierpumpe 7 gekoppelt ist und die Dosierpumpe 7 abschaltet, wenn ein vorgegebener Mindestflüssigkeitspegel im Gasfilterbehälter 4b unterschritten wird. Im oberen Bereich des Gasfilterbehälters 4b sammelt sich das Gas (insbesondere Luft), welches beim Ansaugen der Dosierlösung in die Saugleitung 10 gelangt ist. Der Anschluss 18 vom Gasfilter 4 zur Saugseite der Dosierpumpe 7 ist im stets flüssigkeitsbefüllten unteren Bereich des Gasfilterbehälters 4b angeordnet. Dadurch wird verhindert, dass Gas in die Dosierpumpe 7 gelangt. Das Gas sammelt sich im Kopfteil des Gasfilterbehälters 4b.

Zur Entlüftung des Gasfilters 4 ist eine Entlüftungsleitung 13 vorgesehen, welche im oberen Bereich des Gasfilters, in dem sich das Gas sammelt, in den Gasfilterbehälter 4b mündet. Das andere Ende der Entlüftungsleitung 13 ragt in den Vorratsbehälter 1 (bei dem in Fig. 1 gezeigten Ausführungsbeispiel in das Gebinde 1a). Die Entlüftungsleitung 13 ist mittels eines Absperrventils oder eines Absperrhahns 5 verschließbar.

Zur Wiederbefüllung des Gasfilters 4 mit der Dosierlösung ist erfindungsgemäß eine Bypassleitung 12 vorgesehen, welche unter Umgehung der Dosierpumpe 7 den Anschluss 18 des Gasfilters 4 mit der Druckleitung 15 verbindet. In der Bypassleitung 12 ist ein Absperrventil oder ein Absperrhahn 6 vorgesehen, mit dem die Bypassleitung 12 geschlossen werden kann.

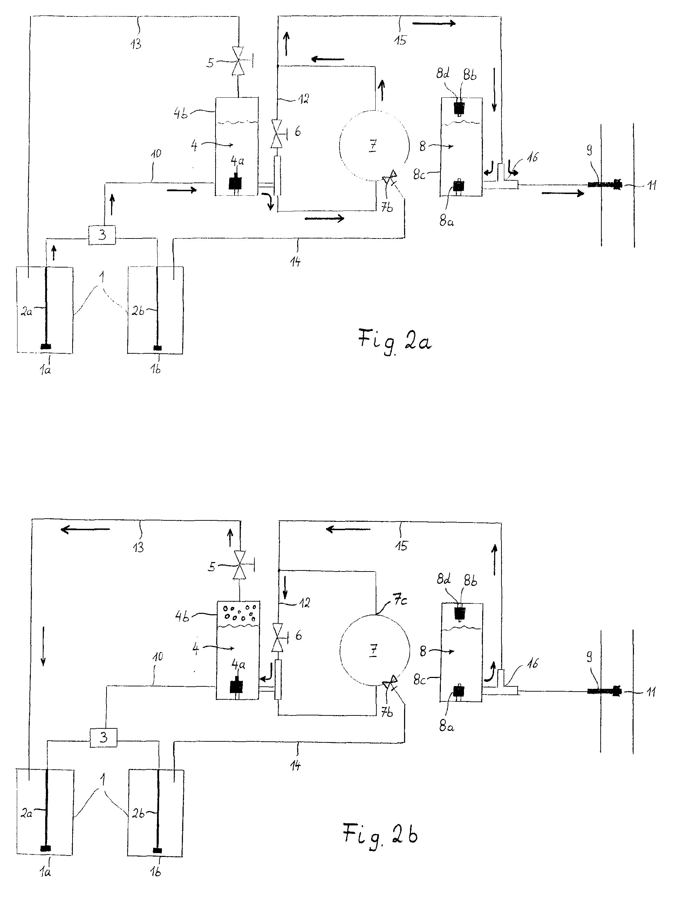

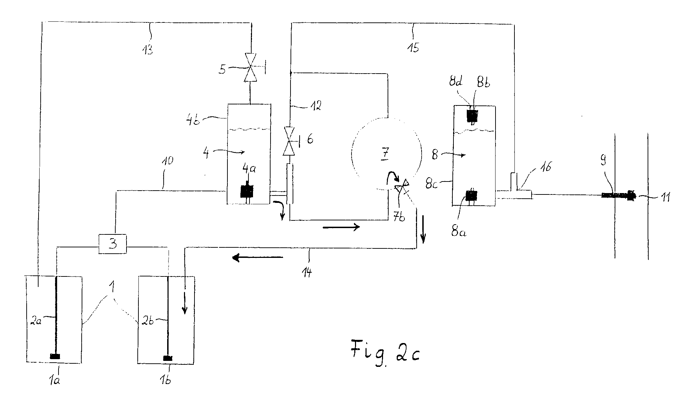

In Fig. 2 sind die Funktionsstufen des erfindungsgemäßen Dosiergeräts schematisch dargestellt.

Fig. 2a zeigt das Dosiergerät beim Dosierbetrieb, in dem die wässrige Dosierlösung aus dem Vorratsbehälter 1 zu der Impfstelle 11 in die Flüssigkeit gefördert wird. Beim Dosierbetrieb sind die Entlüftungsleitung 13 und die Bypassleitung 12 durch die Ventile 5 und 6 geschlossen. Die Dosierpumpe 7 fördert die Dosierlösung aus einem der beiden Gebinde 1a über die Saugleitung 10 und den Gasfilter 4 in die Druckleitung 15 und von dort über das T-Stück 16 einerseits in den Sicherungsimpulsdämpfer 8 und andererseits in die Impflanze 9 zur Impfstelle 11. Die Flussrichtung der Dosierlösung ist in Fig. 2a durch Pfeile gezeigt.

Wenn sich im Gasfilter 4 so viel Gas angesammelt hat, dass der Mindestflüssigkeitspegel im Gasfilterbehälter 4b unterschritten wird, schaltet die Abschaltsteuerung 4a des Gasfilters 4 die Dosierpumpe 7 ab. Um die im oberen Bereich des Gasfilterbehälters 4b angesammelte Gasmenge aus dem Gasfilter 4 wieder zu entfernen, werden nun die Ventile 5 und 6 geöffnet, was zweckmäßig automatisch über die Steuerung des Dosiergeräts erfolgt. Das Gas wird aus dem Gasfilter 4 durch die Entlüftungsleitung 13 verdrängt und die sich im Sicherungsimpulsdämpferbehälter 8c befindliche Dosierlösung fließt durch die Druckleitung 15 und die Bypassleitung 12 zurück in den Gasfilterbehälter 4b und füllt diesen. Dabei wird das Restgas im Gasfilterbehälter 4b in die Entlüftungsleitung 13 gedrückt. Um zu verhindern, dass Dosierlösung unkontrolliert durch die Entlüftungsleitung 13 ausströmt, mündet das Ende der Entlüftungsleitung 13 in den Vorratsbehälter 1 und führt Restmengen der Dosierlösung, die beim Entlüften in die Entlüftungsleitung 13 gelangt sind, zurück in den Vorratsbehälter 1. Diese Funktionsstellung des erfindungsgemäßen Dosiergeräts ist in Fig. 2b gezeigt. Ein Rückschlagventil 7c an der Pumpe 7 verhindert, dass die Dosierlösung in die Dosierpumpe 7 zurückfließt. Auf diese Weise kann einerseits der Sicherungsimpulsdämpfer 8 entleert werden und andererseits der Gasfilter 4 wieder mit Dosierlösung befüllt werden. Anschließend kann das Dosiergerät durch Schließen der Ventile 5 und 6 und Starten der Dosierpumpe 7 wieder in den Dosierbetrieb umgestellt werden, wie in Fig. 2a gezeigt.

Zum Entleeren des Gasfilters 4 ist an der Dosierpumpe 7 eine Ablassleitung 14 angeschlossen, welche über ein Ventil 7a verschließbar ist. Das Ventil 7b wird nur geöffnet, wenn der mit Dosierlösung gefüllte Gasfilter 4 entleert werden soll. Diese Funktion des erfindungsgemäßen Dosiergeräts ist in Fig. 2c dargestellt. In dieser Funktion sind die Ventile 5, 6 und 7b geöffnet und die Dosierpumpe 7 wird kurzzeitig in Betrieb gesetzt. Dadurch saugt die Dosierpumpe 7 über den Anschluss 18 Dosierlösung aus dem Gasfilter 4 und fördert diese in die Ablassleitung 14, welche in den Vorratsbehälter 1 (im gezeigten Ausführungsbeispiel in das Gebinde 1b) mündet. Auf diese Weise wird die aus dem Gasfilter 4 entnommene Dosierlösung zurück in den Vorratsbehälter 1 gepumpt.

Das erfindungsgemäße Dosiergerät ist nicht auf das hier beschriebene und zeichnerisch dargestellte Ausführungsbeispiel beschränkt. In einem erweiterten Ausführungsbeispiel sind z. B. zwei über eine Steuerschaltung gesteuerte und miteinander gekoppelte Dosierpumpen vorgesehen, welche aus insgesamt vier getrennten Vorratsbehältern die Dosierlösung in die Flüssigkeit fördern. Weiterhin kann zur Vereinfachung der Service- und Wartungsarbeiten an den Dosierpumpen vorgesehen sein, diese schwenkbar an einem Rahmengestell oder einem Wandgehäuse zu befestigen. Die Dosierpumpen können dann für Service- und Wartungsarbeiten, wie zum Beispiel einem Wechsel der Pumpenmembran und einer Entlüftung des Pumpendosierkopfes, weggeschwenkt werden, um den Zugang zu den Dosierpumpen zu vereinfachen, ohne dass Anschlussverschraubungen an der Pumpe gelöst werden müssen.

Weiterhin ist bevorzugt eine Steuerschaltung vorgesehen, über welche die Pumpenfunktion der Dosierpumpe eingestellt und gesteuert werden kann. Hierbei ist insbesondere eine Tag- /Nachtschaltung sowie eine Timerfunktion vorgesehen, mit der die Dosierzeit und die Dosierfrequenz individuell eingestellt werden kann. Bevorzugt ist weiterhin eine Umschaltautomatik vorgesehen, mit der pro Dosierpumpe wenigstens zwei Vorratsbehälter angesteuert bzw. umgeschaltet werden können. Ferner sind Membranbruchsicherungen an der Dosierpumpe vorgesehen, welche beispielsweise in Form von Tantalelektroden ausgebildet sein können, um bei einem Membranbruch Leckagen zu detektieren und über die Steuerschaltung die Dosierpumpe bei einem Membranbruch automatisch abschalten zu können.

## Patentansprüche

1. Dosiergerät zur Dosierung einer Lösung in eine Flüssigkeit, mit wenigstens einer Dosierpumpe (7), welche die Lösung über eine Saugleitung (10) aus einem Vorratsbehälter (1) zu einer Impfstelle (11) in die Flüssigkeit fördert, einem in Saugrichtung vor der Dosierpumpe (7) angeordneten Gasfilter (4), welcher über eine Abschaltsteuerung (4a) die Dosierpumpe (7) abschaltet, wenn der Gasfilter (4) mit Gas befüllt ist und einem nach der Dosierpumpe (7) angeordneten Sicherungsimpulsdämpfer (8) zur Überwachung des Drucks der geförderten Lösung an der Impfstelle (11), **dadurch gekennzeichnet, dass** eine die Dosierpumpe (7) umgehende Bypassleitung (12) vorgesehen ist, durch welche die Lösung vom Sicherungsimpulsdämpfer (8) in den Gasfilter (4) zur Wiederbefüllung des Gasfilters (4) zurück fließen kann, wenn der Gasfilter bei Befüllung mit Gas die Dosierpumpe (7) abgeschaltet hat.

2. Dosiergerät nach Anspruch 1, **dadurch gekennzeichnet, dass** in der Bypassleitung (12) ein Absperrventil oder Absperrhahn (6) vorgesehen ist.

3. Dosiergerät nach Anspruch 1 oder 2, **dadurch gekennzeichnet, dass** der Gasfilter (4) über eine Entlüftungsleitung (13) verfügt, über welche das im Gasfilter (4) angesammelte Gas ausströmen kann.

4. Dosiergerät nach Anspruch 3, **dadurch gekennzeichnet, dass** in der Entlüftungsleitung (13) ein Absperrventil oder Absperrhahn (5) vorgesehen ist.

5. Dosiergerät nach Anspruch 4, **dadurch gekennzeichnet, dass** die Entlüftungsleitung (13) in den Vorratsbehälter (1) mündet.

6. Dosiergerät nach einem der voranstehenden Ansprüche, **dadurch gekennzeichnet, dass** der Gasfilter (4) einen Gasfilterbehälter (4b) umfasst und die im Gasfilter angeordnete Abschaltsteuerung (4a) durch einen am Boden des Gasfilterbehälters (4b) angeordneten Niveauschalter gebildet ist, der an die Steuerschaltung der Dosierpumpe (7) gekoppelt ist und die Dosierpumpe (7) abschaltet, wenn ein vorgegebener Flüssigkeitspegel im Gasfilterbehälter (4b) unterschritten wird.

7. Dosiergerät nach einem der voranstehenden Ansprüche, **dadurch gekennzeichnet, dass** der Sicherungsimpulsdämpfer (8) einen Sicherungsimpulsdämpferbehälter (8c) umfasst, in dem zwei in vertikaler Richtung im Abstand zueinander angeordnete Niveaugeber (8a, 8b) vorgesehen sind, welche jeweils an die Steuerschaltung der Dosierpumpe (7) gekoppelt sind und die Dosierpumpe (7) abschalten, wenn im Sicherungsimpulsdämpferbehälter (8c) ein vorgegebener Mindestpegel unter- oder ein vorgegebener Höchstpegel überschritten wird.

8. Dosiergerät nach Anspruch 7, **dadurch gekennzeichnet, dass** der gegenseitige Abstand der beiden Niveaugeber (8a, 8b) einstellbar ist.

9. Dosiergerät nach Anspruch 8, **dadurch gekennzeichnet, dass** zur Einstellung ihres gegenseitigen Abstands wenigstens einer der beiden Niveaugeber (8a, 8b) entlang einer Führungsstange (8d) verschiebbar ist.

10. Dosiergerät nach einem der voranstehenden Ansprüche, **dadurch gekennzeichnet, dass** zur Entleerung des mit Flüssigkeit befüllten Gasfilters (4) an der Dosierpumpe (7) eine über ein Ventil (7b) verschließbare Ablassleitung (14) vorgesehen ist, welche in den Vorratsbehälter (1) mündet.

11. Dosiergerät nach einem der voranstehenden Ansprüche, **dadurch gekennzeichnet, dass** die Dosierpumpe (7) verschwenkbar an einem Rahmengestell oder einem Gehäuse angeordnet ist.
